## Europäisches Patentamt

## European Patent Office

## Office européen des brevets

(11) Publication number: **0 091 323**
**B1**

(12) **EUROPEAN PATENT SPECIFICATION**

(45) Date of publication of patent specification: **26.11.86**

(51) Int. Cl.⁴: **B 65 B 27/02, B 65 G 57/08**

(21) Application number: **83301957.3**

(22) Date of filing: **07.04.83**

(54) Tile stacking.

(30) Priority: **08.04.82 GB 8210504**

(43) Date of publication of application:
**12.10.83 Bulletin 83/41**

(45) Publication of the grant of the patent:
**26.11.86 Bulletin 86/48**

(84) Designated Contracting States:
**DE FR IT SE**

(56) References cited:
**GB-A-2 031 368**

(73) Proprietor: **ANCHOR BUILDING PRODUCTS LIMITED**
**Broomhills Road**
**Leighton Buzzard Bedfordshire (GB)**

(72) Inventor: **Hammond, Leslie Gerald**
**5, Windsor Avenue**
**Leighton Buzzard Bedfordshire (GB)**
Inventor: **Chamberlain, Keith**
**12, Hawthorn Avenue Bletchley**
**Milton Keynes Buckinghamshire (GB)**

(74) Representative: **Keltie, David Arthur et al**
**Baron & Warren 18 South End Kensington**
**London W8 5BU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

This invention relates to a method of and apparatus for forming a stack of tiles, more particularly, extruded concrete roofing tiles, and also more particularly for the purpose of either securing a strap around the stack or wrapping the stack in a plastics material, to form a tile package.

In extrusion processes for manufacturing concrete roofing tiles, the tiles are continuously extruded on pallets and are fed on a conveyor system incorporating belt conveyors from the tile extrusion machine to a depalleting device, usually via a curing zone in which the tiles are partially cured. After depalleting, the tiles are removed from the conveyor and stacked in the open air for curing or to complete the curing process as the case may be.

In order to avoid manual handling of large numbers of uncured or partially cured individual tiles, involving at least one operative with the attendant possibility of the tiles being damaged during removal from the conveyor line, stacking in the open air and transport to site, various systems have been devised for arranging the tiles in successive stacks comprising, for example 40 tiles in which the tiles are arranged one behind the other on one end thereof. The stacks can then be removed from the conveyor by, for example, clamps for storing or as is more usual formed into a tile package either by strapping or banding, or wrapping.

However, in order to ensure that the stacking operation is carried out at a speed which is compatible with that of the extrusion machine, known stacking apparatus is often expensive as it is of complicated design involving many mechanical parts and with complex electrical control systems, which in the event of any malfunction often result in prolonged and expensive down time to find the fault. With more simple, less expensive apparatus known to the Applicants, there can be difficulties in obtaining the requisite operational speeds as can be the case with the apparatus disclosed in GB—A—2,031,368 in which the tiles are turned over bodily at the junction between first and second conveyor paths.

GB—A—2,031,368 discloses tile stacking and packaging apparatus in which the tiles are successively fed on one surface thereof and with the leading and trailing edges of adjacent tiles in edge to edge relationship along a first path and the tiles are successively turned by a stacking device constituted by a rotatable member onto their leading edges and are successively moved on their leading edges along a second path which extends in the same direction as the first path with the opposing surfaces of adjacent tiles facing one another to form a stack of tiles on the second path.

It is an object of this invention to provide a method of and apparatus for forming a stack of tiles which is relatively inexpensive and less complicated and more flexible than the aforesaid known methods and apparatus.

To this end and from one aspect, the present invention consists in a method of stacking tiles in which the tiles are successively fed on one surface thereof and with the leading and trailing edges of adjacent tiles in edge to edge relationship along a first path, in which the tiles are successively turned onto one of their edges and are successively moved on their said one edges along a second path and one behind the other with the opposing surfaces of adjacent tiles facing one another to form a stack of said tiles on said second path, characterized in that the tiles, using a guide which extends diagonally of the first path, are turned onto one of their edges, which is neither of their leading and trailing edges, whilst maintaining said edge to edge relationship of their leading and trailing edges and whilst travelling along the first path and in that the second path is disposed at an angle to the first path.

From another aspect, the present invention consists in apparatus for forming a stack of tiles, said apparatus comprising means for successively conveying the tiles on one surface thereof and with the leading and trailing edges of adjacent tiles in edge to edge relationship along a first path, means for successively turning the tiles onto one of their edges and means for successively moving the tiles on their said one edges along a second path and being positioned one behind the other with the opposing surfaces of adjacent tiles facing one another to form a stack of tiles on said second path, characterized in that means including a guide which extends diagonally of the first path is disposed along the path for successively turning the tiles onto said one of their edges, which is neither of their leading and trailing edges, whilst maintaining said edge to edge relationship of their leading and trailing edges and whilst travelling along the first path, in that means is provided for supporting the tiles on their said one edges along the path, in that the second path is disposed at an angle to the first path and in that means is provided for successively moving the tiles on their said one edges from said first path onto the second path.

By turning the tiles using the diagonally extending guide onto the one of their edges along the same path that moves the tiles from the depalleter whilst maintaining the edge to edge relationship of their leading and trailing edges, and then moving the tiles on their another edges onto another path and one behind the other with the opposing surfaces of adjacent tiles facing one another, the turning and stacking operation can be carried out at speeds which are compatible with those of modern tile extrusion machines.

"Tiles" is used herein in a generic sense to include any other slab-like elements whether made of concrete, clay, wood, plastics or other materials, e.g. paving slabs.

The guide may be a stationary guide extending diagonally across the first mentioned path from one side to just short of the other side or as is preferred to reduce wear on the diagonal run of a conveyor run system. Preferably, an upper run of this conveyor system extends upwardly at an angle to and generally in the direction of the first path and is located on one side of the first path and the diagonal run which is down-stream of said upper conveyor run extends from said one side of said first path and diagonally thereacross and stop at a location which is just short of the other side of the path. The conveyor run system is operated at the speed of the conveyor driver along the first path.

Whether the stationary guide or diagonal conveyor run is employed, said edges of the tiles are advantageously supported during and after the turning operation on a conveyor band preferably of wear resistant material, which is run at the speed of the conveyor path drive,

In a preferred embodiment, the upper run of another conveyor extends throughout the length of the first conveyor path and, after turning of each tile is engaged by the same surface of each tile as the diagonal second run but adjacent the lower edge onto which the tile has been turned so that the tile is supported in a substantially vertical position. In this embodiment a run of a further conveyor may be engaged by the other surface of the tile adjacent its lower edge and opposite the upper rung of said another conveyor in order further to stabilize the tile in a substantially vertical position.

As the now substantially vertical tiles move along the first conveyor path whilst maintaining their edge to edge relationship, suitable electrical switching means, for example a photoelectric cell, is actuated such that as each tile moves off the end of the first conveyor path it is engaged by pusher means which moves the tile sideways onto the second path on which the tile stack is formed.

Preferably, the pusher means are driven by an electrical motor or alternatively a pressure fluid operated means such as a piston and cylinder device, operated by the electrical switching means.

In a preferred embodiment, the pusher means are constituted by upper and lower rotary shafts carrying a plurality of flexible elements such as flaps driven by the electric motor through a convenient drive and a means which limits the amount of angular movement of the shafts to increments dependent upon the number of spaces between the flexible elements, the elements on the shafts engaging with one surface of each tile adjacent its upper and lower edges respectively to effect the pushing motion. The limiting means may be a pawl and ratchet mechanism, for example.

The second path preferably includes a drive conveyor operated by an electric motor which is responsive to second electrical switching means which is actuated by the movement of each tile by the pusher means such that the conveyor moves each tile along one step, before being braked, to form the stack and such as to leave space for the next tile moved by the pusher means. The second electrical switching means may be a proximity switch.

The apparatus may include a counter such that, when the number of tiles reaches the desired number, e.g. 40 or 50, the stack is removed from the second path, e.g. by a suitable clamp for example for a packaging operation or is packaged at a convenient location along the second path.

The tile stack can be packaged with a band or strap or with shrink or cling wrapping.

In order that the invention may be more readily understood, reference will now be made, by way of example, to the accompanying drawings in which:—

Fig. 1 is a diagrammatic side elevation of one embodiment of apparatus for forming a stack of tiles and constructed in accordance with the invention,

Fig. 2 is a plan view of Fig. 1,

Fig. 3 is a diagrammatic perspective view, to an enlarged scale, along a first conveyor path forming part of the apparatus of Fig. 1,

Fig. 4 is a cross-section taken along the line IV—IV of Fig. 3,

Fig. 5 is a diagrammatic end elevation of part of the apparatus of Fig. 1, and

Fig. 6 is a perspective scrap view of the apparatus of Fig. 1.

Referring to the drawings, the stacking apparatus comprises a first conveyor path which is generally indicated at 1 and on which concrete roof tiles 2 are turned from a substantially flat position in which they lie on one surface thereof in edge to edge relationship into a position in which they are supported in a substantially vertical position on another of their side edges whilst maintaining the edge to edge relationship. At right angles to the conveyor path 1 is a second conveyor path 3 on which the turned concrete roof tiles 2 are formed into a stack 4. The conveyor path 1 comprises two sections which are generally indicated at 5 and 6, the first 5 being only partly shown and broken away for the purpose of clarity. The section 5 leads straight from the depalleter and lies along the same path as the depalleting conveyor system. As will be seen from the drawings the concrete roof tiles 2 are in their flat positions in the conveyor section 5 which comprises two conveyor bands 7, 7a extending over freely rotatable pulley wheels 7b fixed to respective spindles on the upper runs of which the tiles are supported.

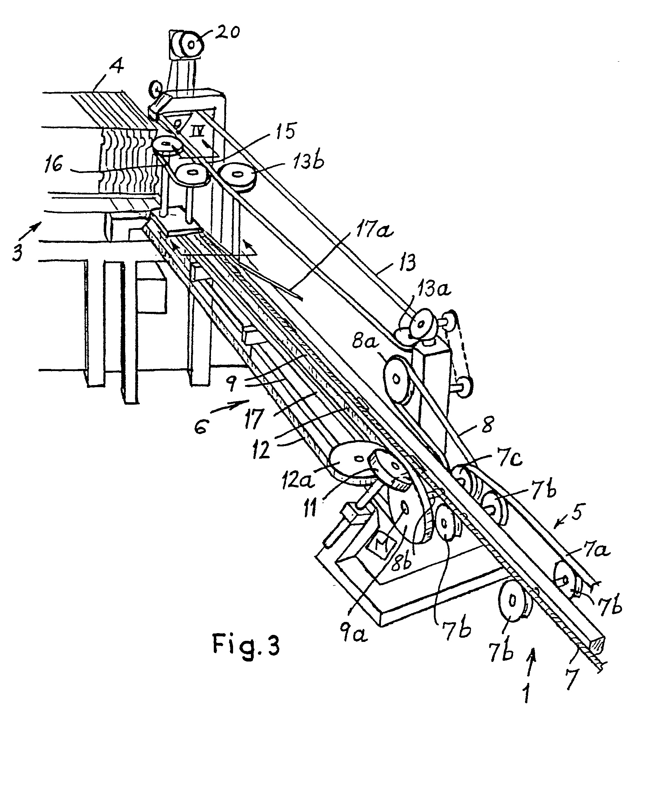

In the second section 6 of the conveyor path 1 the tiles 2 are progressively turned through 90°, as shown at the locations of tiles 2a and 2b until they occupy a substantially vertical position on one of their side edges as shown by the tile 2c. The section 6 comprises a conveyor run system consisting of the conveyor band 7 (the left-hand band as illustrated in Fig. 3), a conveyor band 8 on one side of the conveyor path 2 (the right-hand side as illustrated in Fig. 3) the upper run 8c of which is inclined upwardly from the level of the right-hand band 7a and extends around rotatable pulley wheels 8a of which the lower pulley wheel 8a is mounted on the same spindle 8b as a drive wheel 7c around which the right-hand band 7a (as illustrated in Fig. 3) extends and returns in the downstream direction. The band 8 commences the operation of turning the tiles onto one of their side edges as can be seen by the position of the tile 2a. As the tile 2a is turned, its leading edge makes contact with the upper run of another conveyor band 9 of the conveyor run system having a width sufficient to support the now bottom side edge 10 of the tile as can be seen by the position of the tile 2b. As the turning tile 2a is moved along the section 6 of conveyor path 1 it reaches a position in which a lower region of one of its surfaces adjacent its trailing edge engages with a freely rotatable wheel 11, e.g. of plastics material, disposed opposite the lower pulley wheel 8a and pulley wheel 7a such that the trailing edge is prevented from lifting and affecting the turning operation. The conveyor band 9 extends for the length of section 6 of conveyor path 1 around pulley wheels 9a of which the downstream pulley wheel 9a is driven and mounted on the spindle 8b.

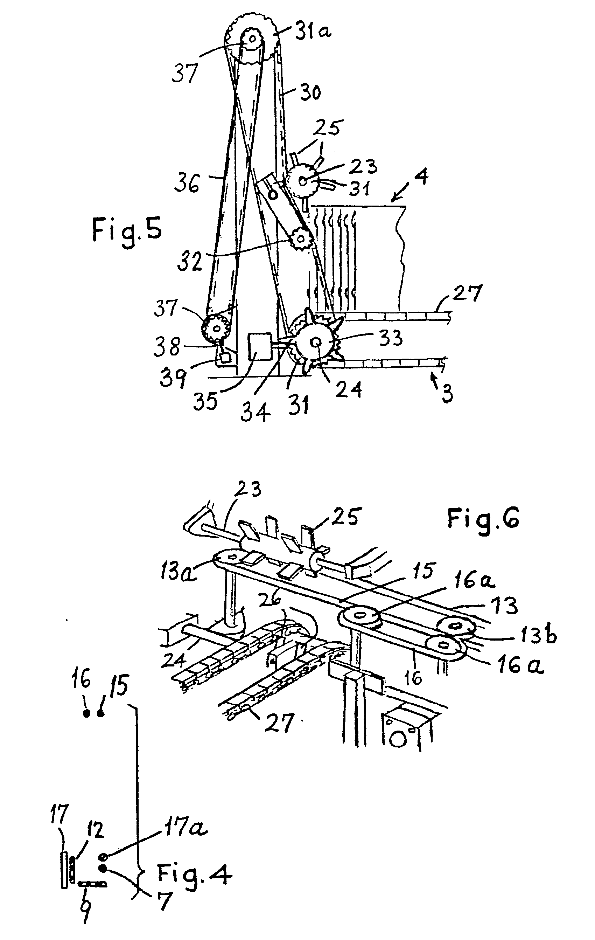

Just downstream of the drive pulley wheel 9a, is another driven pulley wheel 12a which drives another conveyor band 12 of similar width to the band 9 and which extends also around a similar pulley wheel (not shown) to the pulley wheel 12a. The band 12 extends for the remainder of the length of section 6 of the conveyor path 1 in a substantially vertical position as will be more readily apparent from Fig. 4. The bands 9 and 12 are preferably made of a wear resistant plastics material.

At the position of the tile 2b, the tile is turned further as it is advanced by the conveyor band 9 along the section 6 of the conveyor path 1 to a substantially vertical position, as shown by the position of the tile 2c, by another conveyor band 13 of the conveyor run system. The band 13 extends around pulley wheels 13a and 13b which are positioned such that a portion 14 of the inner run of the conveyor band 13 extends diagonally across the conveyor section 6 from one side to just short of the other side where it passes around the freely rotatable pulley wheel 13b. The inner run portion 14 is engaged by one of the surfaces of the tile 2b nearer its upper edge at a distance from its upper edge until it reaches the substantially vertical position of the tile 2c with its leading edge opposite the wheel 13b where the inner run portion 14 engages with the said one surface of the tile 2c further from its upper edge. Another conveyor run portion 15 of the band 13 which extends parallel to the section 6 of conveyor path 1 between the pulley wheel 13b and the downstream pulley wheel 13a is disposed parallel to the inner run of another conveyor band 16 of the conveyor run system, which band 16 extends around pulley wheels 16a.

After turning of each tile has commenced, the upper run of the band 7 is engaged by the same surface of the tiles 2a, 2b and 2c as that engaged by the inner run portion 14, of band 13, but adjacent the lower side edges of the tiles so as to satisfactorily support the tiles during their passage through the section 6. The inner run of the conveyor band 12, or alternatively a stationary guide plate or bar 17 on the other side of the conveyor section 6, is engaged by the opposite surfaces of the tiles 2a, 2b and 2c adjacent their lower side edges to provide additional support for the tiles opposite the inner run portion 14 of band 13 and band 7 in section 6 to ensure that the tiles do not slip off the conveyor band 9 as the turning process starts and continues. Instead of the conveyor band 16 which ensures that the next tile coming into position of tile 2c is stabilized as it approaches the vertical, one or more freely rotatable guide wheels may be provided. Additionally, in order to facilitate guiding the turning tiles into the gap between parallel inner run portion 15 of band 13 and the inner run of band 16, a stationary guide bar 17a of wear resistant material may be provided, as illustrated in Fig. 3.

The conveyor bands 7, 7a, 8, 9, 12, 13 and 16 are driven by an electric motor M which drives the common spindle 8b on which pulley wheels 7c and 9a and lower pulley wheel 8a are fixed, for example through appropriate gearing, drive belts, chains etc. which are not referred to in detail. The conveyor bands 7, 7a, 8, 13 and 16 are conveniently of circular cross-section, whereas the conveyor bands 9 and 12 are of strip form.

As the tiles enter the position of the tile 2c, the light beam of a photoelectric cell 18 cooperating with a mirror 19 is interrupted and the photoelectric cell, which constitutes an electrical switching means, sends a signal to a second electric motor 20 (Fig. 3) for driving pusher means to be described, when the tile moves out of the position of the tile 2c.

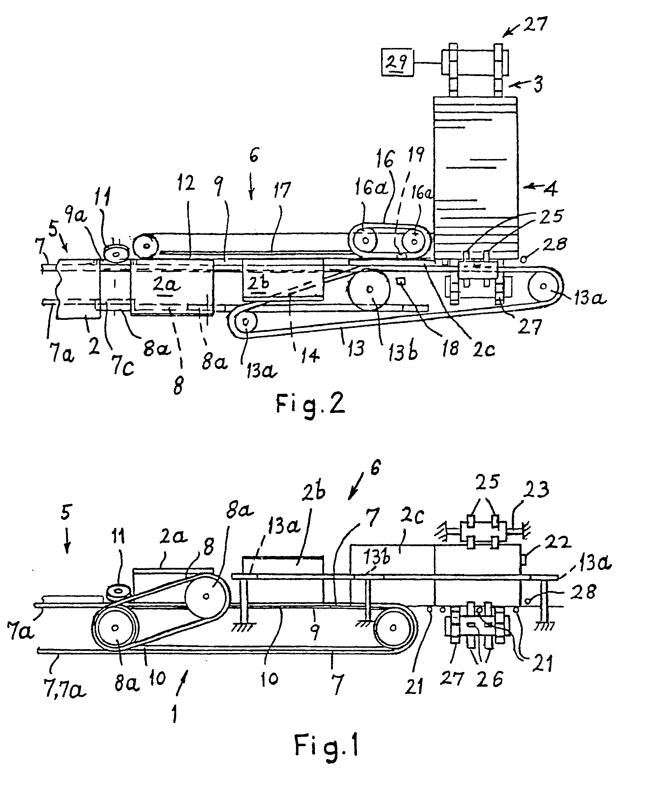

The movement of the conveyor run system causes the tile 2c to be moved through the gap between the inner run of band 16 and inner run portion 15 of band 13 and across freely rotatable rollers 21, with the bottom edge 10 at its leading end engaging the rollers 21 before the trailing end of the tile leaves the gap, and into a position in which it is aligned with the tiles of the stack 4, its movement being limited by an end stop 22 (Fig. 1). Movement of the tile 2c into alignment with the stack 4 restores the passage of the light beam of the photoelectric cell 18 to the mirror 19 which results in operation of an electric motor 20 causing upper and lower shafts 23 and 24 to move angularly by a small increment determined in a manner to be described such that flexible elements 25 and 26 projecting respectively from the two shafts engage the tile and move it onto the two runs of a conveyor 27 which extends along the conveyor path 3.

As the tile 2c is moved by the flexible elements 25 and 26 along the path 3 a proximity switch 28 is actuated releasing the brake of an electric drive motor 29 for the conveyor 27 which co-operates in a step-wise fashion such that the tile 2c is moved for a distance sufficient to leave enough space for the next tile to enter the conveyor path 3 and be supported on the conveyor 27. This is achieved by the proximity switch 28 being only momentarily actuated by the passage of the tile so that as the tile moves out of the range of the switch a further signal is sent to the electric motor 29 causing its brake to operate and the motor to stop.

The shafts 23 and 24, which each present five spaces defined by their respective flexible elements 25 and 26 which the upper and lower edges of the tile enter to be pushed onto the stacking conveyor 27 are driven by means of a chain 30 engaging with an uppermost sprocket wheel 31a, upper and lower sprocket wheels 31 fixed on the respective shafts 23 and 24 and an intermediate sprocket wheel 32 positioned to ensure that the outside of chain 30 engages with the upper sprocket wheel 31, and turn the shaft 23 in the same direction as that of shaft 24. The uppermost sprocket wheel 31a is driven by the electric motor 20. A pinion wheel 33, which is also fixed to the shaft 24, has five projecting teeth 34 which are engageable in turn with an electrical switch 35 which limits the amount of angular movement of the shafts 23 and 24 to that which is sufficient for the tiles to be moved from their position on the rollers 21 onto the stacking conveyor 27 and bring the next flexible elements into a position in which the following tile can be pushed onto the stacking conveyor.

A counting means is constituted by a chain 36 which extends around sprocket wheels 37 with the upper sprocket wheel being fixed to, and driven by, the shaft on which the uppermost sprocket wheel 31a is mounted. The chain has a cam element 38 which engages with another electrical switch 39 each time the chain 36 has passed through one complete revolution so that when the requisite number of tiles, e.g., 50, in cases where 40 tiles are to form the stack, have been stacked on the conveyor 27, a signal can be sent to, for example a clamping system to remove a stack of 40 tiles from, or away from, the conveyor path 3 to a location for a packaging operation or, alternatively, commence a packaging operation on the conveyor path 3 itself. In this latter case, the signal from the counter could be arranged to cause motor 29 to move the conveyor 27 for a sufficient distance such that another stack could be commenced to be formed on the conveyor 27 whilst the packaging operation takes place.

It will be appreciated that the apparatus and method described is extremely simple in operation and allows speeds of tile stacking which are compatible with the speeds of modern tile extrusion machines and moreover involves the use of a minimal number of mechanical parts and utilizes a very simple electrical control system. The control system may use different kinds of switches to those of the photoelectric cell and proximity switch. The whole operation is conveniently controlled by a suitable control panel mounted at a convenient location but which has not been shown for the purposes of clarity. It will also be appreciated that only three electrical drive motors are utilized and only two of these, namely the motors 20 and 29 are controlled by appropriate switches actuated by the movement of the tiles.

Although the invention has been described specifically with reference to turning the tiles onto their side edges, it should be appreciated that the tiles may be fed to the turning means with the side edges in the leading and trailing positions instead of their ends, as is usual. Moreover, some tiles may be substantially square so it should be understood that reference herein to "edge" embraces turning the tiles onto any of their edges.

Furthermore, although the specific description relates to concrete roofing tiles which may be contoured or flat, other forms of tiles may be stacked by the method and apparatus of the invention, for example, quarry tiles, and glazed tiles. Whatever the form of the tiles, when the tiles are stacked at least a part of their oppositely facing surfaces will be in contact. For example in the case of roofing tiles, the nibs on the undersurface of the tiles except for one end tile will contact the oppositely facing surface of the next adjacent tile. The number of tiles in the stack may be course be any desired number, for example as few as four or five or as many as a hundred.

## Claims

1. A method of stacking tiles in which the tiles are successively fed on one surface thereof and with the leading and trailing edges of adjacent tiles in edge to edge relationship along a first path, in which the tiles are successively turned onto one of their said one edges and are successively moved on their said one edges along a second path and behind the other with the opposing surfaces of adjacent tiles facing one another to form a stack of said tiles on said second path, characterized in that the tiles (2) are turned, using a guide (14) which extends diagonally of the first path (1), onto one of their edges (10), which is neither of their leading and trailing edges, whilst maintaining said edge to edge relationship of their leading and trailing edges and whilst travelling along the first path (1) and in that the second path (3) is disposed at an angle to the first path (1).

2. Apparatus for forming a stack of tiles, said apparatus comprising means for successively conveying the tiles on one surface thereof and with the leading and trailing edges of adjacent tiles in edge to edge relationship along a first path, means for successively turning the tiles onto one of their edges and means for successively moving the tiles on their said one edges along a second path and being positioned one behind the other with the opposing surfaces of adjacent tiles facing one another to form a stack of tiles on said second path, characterized in that means (8 and 13), including a guide (14) which extends diagonally of the first path (1), is disposed along the path (1) for successively turning the tiles (2) onto one of their edges (10), which is neither of their leading and trailing edges, whilst maintaining said edge to edge relationship of their leading and trailing edges and whilst travelling along the first path (1), in that means (9) is provided for supporting the tiles (2) on their said one edges (10) along the path (1), in that the second path (3) is disposed at an angle to the first path (1) and in that means (25, 26) is provided for successively moving the tiles (2) on their said one edges (10) from said first path (1) onto the second path (3).

3. Apparatus as claimed in claim 2, characterized in that the guide (14) is a stationary guide which extends diagonally across said first path (1) from one side to a location just short of the other side.

4. Apparatus as claimed in claim 2, characterized in that the turning means (8, 13) is a conveyor run system comprising a first conveyor (8) and a second conveyor (13) and in that the guide (14) is a diagonal run (14) of the second conveyor (13), and extends diagonally across said first path (1) from one side to a location just short of the other side.

5. Apparatus as claimed in claim 4, characterized in that the first conveyor (8) has an upper run (8c) which extends upwardly at an angle to and generally in the direction of said first path (1), said upper run (8c) being located on one side of said first path (1), and the diagonal run (14) of the second conveyor (13) is located downstream of said upper run (8c), the first and second conveyors (8 and 13) being operated at the same speed as that of the said means for successively conveying the tiles (2) along said first path.

6. Apparatus as claimed in claim 5, characterized in that the said diagonal run (14) is continuous with a conveyor run portion (15) which forms part of the second conveyor (13) and which extends downstream of the diagonal run (14) in parallel with said first path (1), said conveyor run portion (15) being spaced from co-operating means (16) located at the other side of said first path.

7. Apparatus as claimed in claim 6, characterized in that the co-operating means is a stationary guide member or at least one freely rotatable member.

8. Apparatus as claimed in claim 6, characterized in that the co-operating means is a run of another conveyor (16).

9. Apparatus as claimed in any one of claims 2 to 8, characterized in that said one edges (10) of the tiles (2) are supported during and after the turning operation on a run of a conveyor (9) which is operated at the same speed at that of the means for successively conveying the tiles along the first path (1).

10. Apparatus as claimed in any one of claims 2 to 9, characterized in that a run of a conveyor (7), which extends throughout the length of said first path (1) is engaged, after turning of each tile (2) has commenced, by the same surface of each tile as the turning means (8, 13, 14).

11. Apparatus as claimed in claim 10, characterised in that a run of a further conveyor (12) is engaged by the other surfaces of the tiles adjacent their said one edges (10).

12. Apparatus as claimed in claim 10, characterized in that an elongate guide member (17) is engaged by the other surfaces of the tiles adjacent their said one edges.

13. Apparatus as claimed in any one of claims 2 to 12, characterized by electrical switching means (18, 19) which is actuated by the movement of each substantially vertical tile (2c), and by pusher means (23 to 26) for moving each tile (2c) sideways onto said second path (3) on which the tile stack (4) is formed, said pusher means (23 to 26) being responsive to the actuation of the switching means (18, 19) to effect said sideways movement as each tile (2c) moves off the end of said first path.

14. Apparatus as claimed in claim 13, characterized in that the pusher means (23 to 26) comprises driven upper and lower rotary shafts (23 and 24) carrying a plurality of projecting flexible elements (25 and 26) respectively and a means which limits the amount of angular movement of the shafts (23 and 24) to increments dependent upon the number of spaces between the flexible elements (25 and 26), the said flexible elements (25 and 26) engaging with a surface of each tile adjacent its upper and lower edges respectively to effect the pushing motion.

15. Apparatus as claimed in claim 14, characterized in that the second path (3) includes a drive conveyor (27) operated by drive means (29) which is responsive to another electrical switching means (28) which is actuated by the movement of each tile (2c) by the pusher means (23 to 26) and then is deactuated, such that the conveyor (27) moves each tile (2c) along step by step, to form the stack (4) and such as to leave space on the conveyor for the next tile (2c) moved by the pusher means (23 to 26).

**Patentansprüche**

1. Verfahren zum Stapeln von Dachpfannen, bei dem die Pfannen auf ihrer einen Seite und mit der voreilenden und nacheilenden Kante benachbarter Pfannen in einer Kante-zu-Kante-Beziehung entlang eines ersten Förderweges aufeinanderfolgend gefördert werden, auf welchem die Pfannen aufeinanderfolgend auf eine ihrer Kanten gedreht werden, und bei dem die Pfannen auf diesen Kanten aufeinanderfolgend und eine hinter der anderen entlang eines zweiten Weges bewegt werden, wobei die gegenüberliegenden Flächen benachbarter Pfannen einander zugewandt sind, um einen Stapel aus den Pfannen auf dem zweiten Weg zu bilden, dadurch gekennzeichnet, daß die Pfannen (2) unter Verwendung einer sich diagonal auf dem ersten Weg (1) erstreckenden Führung (14) auf eine ihrer Kanten (10) gedreht werden, die weder ihre voreilende noch ihre nacheilende Kante ist, während die Kante-zu-Kante-Beziehung der voreilenden und nacheilenden Kanten während des Laufens der Pfannen entlang des ersten Weges aufrechterhalten wird, und daß der zweite Weg (3) in einem Winkel zum ersten Weg (1) verläuft.

2. Vorrichtung zum Bilden eines Stapels aus Dachpfannen, bestehend aus Mitteln zum aufeinanderfolgenden Fördern der Pfannen auf einer ihrer Flächen und mit der voreilenden und nacheilenden Kante benachbarter Pfannen in einer Kante-zu-Kante-Beziehung entlang eines ersten Weges, aus Mitteln zum aufeinanderfolgenden Drehen der Pfannen auf eine ihrer Kanten und aus Mitteln zum aufeinanderfolgenden Bewegen der Pfannen auf ihrer genannten einen Kante entlang eines zweiten Weges, wobei die Pfannen eine hinter der anderen und mit den sich gegenüberliegenden Flächen benachbarter Pfannen einander zugekehrt positioniert werden, dadurch gekennzeichnet, daß mittel (8 und 13), die eine sich diagonal auf dem ersten Weg erstreckende Führung (14) einschließen, entlang des Weges zum aufeinanderfolgenden Drehen der Pfannen (3) auf eine ihrer Kanten (10), die weder die voreilende noch die nacheilende Kante ist, während die Kante-zu-Kante-Beziehung der voreilenden und nacheilenden Kante beibehalten wird und während die Pfannen entlang des ersteb Weges (1) wandern, angeordnet sind, daß Mittel (9) zum Stützen der Pfannen (2) auf ihrer genannten einen Kante (10) entlang des ersten Weges (1) vorgesehen sind, daß der zweite Weg (3) in einem Winkel zu dem ersten Weg (1) verläuft und daß Mittel (25, 26) zum aufeinanderfolgenden Bewegen der Pfannen (2) auf ihrer genannten einen Kante (10) von dem ersten Weg (1) auf den zweiten Weg (3) vorgesehen sind.

3. Vorrichtung nach Anspruch 2, dadurch gekennzeichnet, daß die Führung (14) eine stationäre Führung ist, die sich von einer Seite diagonal über den ersten Weg (1) bis zu einer Stelle kurz vor der anderen Seite erstreckt.

4. Vorrichtung nach Anspruch 2, dadurch gekennzeichnet, daß die Drehmittel (8, 13) aus einem Fördertrumsystem bestehen, das einen ersten FÖrderer (8) und einen zweiten Förderer (13) umfaßt, und daß die Führung (14) ein Diagonaltrum (14) des zweiten Förderers (13) ist und sich von einer Seite diagonal über den ersten Weg (1) zu einer Stelle kurz vor der anderen Seite erstreckt.

5. Vorrichtung nach Anspruch 4, dadurch gekennzeichnet, daß der erste Förderer (8) ein Obertrum (8c) aufweist, das sich in einem Winkel aufwärts zu und im allgemeinen in der Richtung des ersten Weges (1) erstreckt, daß das Obertrum (8c) auf einer Seite des ersten Weges (1) angeordnet ist, daß das Diagonaltrum (14) des zweiten Förderers (13) nachlaufseitig des Obertrums (8c) angeordnet ist und daß der erste und zweite Förderer (8 und 13) mit der gleichen Geschwindigkeit betrieben werden wie die Mittel zum aufeinanderfolgenden FÖrdern der Pfannen (2) entlang des ersten Weges.

6. Vorrichtung nach Anspruch 5, dadurch gekennzeichnet, daß sich der Diagonaltrum (14) ununterbrochen in einem Fördertrumabschnitt (15) fortsetzt, der einen Teil des zweiten Förderers (13) bildet und sich nachlaufseitig des Diagonaltrums (14) parallel zum ersten Weg (1) erstreckt, und daß der Fördertrumabschnitt (15) von kooperierenden Mitteln (16) beabstandet ist, die auf der anderen Seite des ersten Weges angeordnet sind.

7. Vorrichtung nach Anspruch 6, dadurch gekennzeichnet, daß die kooperierenden Mittel aus einem stationären Führungsglied oder auf wenigstens einen frei drehenden Glied bestehen.

8. Vorrichtung nach Anspruch 6, dadurch gekennzeichnet, daß die kooperierenden Mittel aus einem Trum eines weiteren Förderers (16) bestehen.

9. Vorrichtung nach den Ansprüchen 2 bis 8, dadurch gekennzeichnet, daß die genannte eine Kante (10) der Pfanne (2) während und nach dem Drehvorgang auf einem Trum eines Förderers (9) angestützt wird, der mit derselben Geschwindigkeit wie diejenige der Mittel zum aufeinanderfolgenden Fördern des Pfannen entlang des ersten Weges (1) betrieben wird.

10. Vorrichtung nach den Ansprüchen 2 bis 9, dadurch gekennzeichnet, daß ein Trum eines Förderers (7), das sich über die gesamte Länge des ersten Weges (1) erstreckt, mit derselben Fläche jeder Pfanne in Eingriff gelangt wie die Drehmittel (8, 13, 14), nachdem das Drehen jeder Pfanne (2) begonnen hat.

11. Vorrichtung nach Anspruch 10, dadurch gekennzeichnet, daß ein Trum eines weiteren Förderers (12) mit der anderen Fläche der Pfannen in Eingriff gelangt, die zu deren genannter einen Kante (10) benachbart ist.

12. Vorrichtung nach Anspruch 10, dadurch gekennzeichnet, daß ein längliches Führungsglied (17) mit der anderen Fläche der Pfannen in Eingriff gelangt, das zu deren gennanter einen Kante (10) benachbart ist.

13. Vorrichtung nach Anspruch 2 bis 12, gekennzeichnet durch elektrische Schaltmittel (18, 19), die durch die Bewegung jeder im wesentlichen vertikalen Pfanne (2c) betätigt werden, und durch Schiebemittel (23 bis 26) zur Seitwärtsbewegung jeder Pfanne (2c) auf den zweiten Weg (3), auf dem der Stapel (4) gebildet wird, wobei die Schiebemittel (23 bis 26) auf die Betätigung der Schaltmittel (18, 19) ansprechen, um die Seitwärtsbewegung zu bewirken, wenn jede Pfanne (2c) den ersten Weg verläßt.

14. Vorrichtung nach Anspruch 13, dadurch gekennzeichnet, daß die Schiebemittel (23 bis 26) eine obere und untere, jeweils angetriebene Welle (23 und 24), die je eine Vielzahl von vorstehenden, flexiblen Elementen (25 bzw. 26) tragen, und Mittel umfassen, die den Betrag der Winkelbewegung der Wellen (23 und 24) auf Inkremente begrenzen, die von der Anzahl der Abstände zwischen den flexiblen Elementen abhängig sind, und daß die flexiblen Elemente (25 und 26) mit derjenigen Fläche jeder Pfanne in Eingriff gelangen, die zu deren oberen und unteren Kanten entsprechend benachbart sind, um die Schiebebewegung zu bewirken.

15. Vorrichtung nach Anspruch 14, dadurch gekennzeichnet, daß der zweite Weg (3) einen Antriebsförderer (27) einschließt, der durch einen Antrieb (29) betrieben wird, der auf weitere elektrische Schaltmittel (28) anspricht, die durch die Bewegung jeder Pfanne (2c) durch die Schiebemittel (23 bis 26) eingeschaltet und derart ausgeschaltet werden, daß der FÖrderer (27) jede Pfanne (2c) zwecks Bildung des Stapels (4) schrittweise weiterbewegt, und weiter derart ausgeschaltet werden, daß auf dem Förderer ein Raum für die nächste, durch die Schiebemittel (23 bis 26) heranbewegte Pfanne (2c) belassen wird.

**Revendications**

1. Procédé d'empilage de tuiles dans lequel les tuiles sont successivement appliquées sur une de leurs surfaces et avec les bords avant et arrière des tuiles adjacentes bord à bord, le long d'une première trajectoire, dans lequel les tuiles sont successivement tournées sur l'un de leurs bords et sont successivement déplacées sur leurs dit premiers bords le long d'une seconde trajectoire et l'une derrière l'autre avec les surfaces opposées des tuiles adjacentes tournées l'une vers l'autre pour former une pile desdites tuiles sur ladite seconde trajectoire, caractérisé en ce que les tuiles (2) sont tournées, en utilisant un guide (14) qui est orienté le long d'une diagonale de la première trajectoire (1) amené sur l'un de leurs bords (10), qui n'est ni le bord avant ni le bord arrière, tout en maintenant la relation bord à bord entre les bords avant et arrière et pendant la circulation le long d'une première trajectoire (1) et en ce que la seconde trajectoire (3) fait un certain angle par rapport à la première (1).

2. Appareil pour former une pile de tuiles, ledit appareil comprenant des moyens pour convoyer successivement les tuiles sur une de leurs surfaces et avec les bords avant et arrière des tuiles adjacentes en relation bord à bord le long d'une première trajectoire, des moyens pour tourner successivement les tuiles jusque sur l'un de leurs bords et des moyens pour déplacer successivement les tuiles sur leurs dits premiers bords le long d'une seconde trajectoire et de les positionner l'une derrière l'autre avec les surfaces opposées des tuiles adjacentes tournées l'une contre l'autre pour former une pile de tuiles sur ladite seconde trajectoire, caractérisé en ce que des moyens (8 et 13) comprenant un guide (14) qui est orienté le long d'une diagonale de la première trajectoire (1) est disposé le long de la trajectoire (1) pour tourner successivement les tuiles (2) jusqu'à l'un de leurs bords (10) qui n'est ni le bord avant ni le bord arrière, tout en maintenant la relation bord à bord entre les bords avant et arrière et tout en les déplaçant le long de la première trajectoire (1), en ce que des moyens (9) sont prévus pour soutenir les tuiles (2) sur leurs dits premiers bords (10) le long de la trajectoire (1), en ce que la seconde trajectoire (3) est disposée avec un certain angle par rapport à la première trajectoire (1) et en ce que des moyens (25, 26) sont prévus pour déplacer successivement les tuiles (2) sur leurs dits premiers bords (10) depuis ladite première trajectoire (1) jusqu'à la seconde trajectoire (3).

3. Appareil selon la revendication 2, caractérisé en ce que le guide (14) est un guide fixe qui est orienté le long d'une diagonale traversant la première trajectoire (1) depuis un côté jusqu'à un emplacement situé avant l'autre côté.

4. Appareil selon la revendication 2, caractérisé en ce que les moyens de rotation (8, 13) sont contitués par un système de brin de convoyeur comprenant un premier convoyeur (8) et un second convoyeur (13) et en ce que le guide (14) est un brin en diagonale (14) du second convoyeur (13) et s'étend en diagonale en travers de ladite première trajectoire (1) à partir d'un côté jusqu'à un emplacement situé avant l'autre côté.

5. Appareil selon la revendication 4, caractérisé en ce que le premier convoyeur (8) comprend un brin supérieur (8c) qui s'étend vers le haut sous un certain angle par rapport à ladite première trajectoire (1) et généralement dans sa direction, ledit brin supérieur (8c) étant situé d'un côté de ladite première trajectoire (1) et le brin diagonale (14) du second convoyeur (13) est situé en aval dudit brin supérieur (8c), le premier et le second convoyeurs (8 et 13) étant actionnés à la même vitesse que celle desdits moyens pour transporter successivement des tuiles (2) le long de ladite première trajectoire.

6. Appareil selon la revendication 5, caractérisé en ce que ledit brin en diagonale (14) est continu avec une portion de brin de convoyeur (15) qui fait partie du second convoyeur (13) et qui s'étend en aval du brin en diagonale (14) en parallèle avec ladite première trajectoire (1), ladite portion du brin du convoyeur (15) étant espacée des moyens coopérants (16) situés de l'autre côté de ladite première trajectoire.

7. Appareil selon la revendication 6, caractérisé en ce que les moyens coopérants sont constitués par un élément de guidage fixe ou au moins un élément tournant librement.

8. Appareil selon la revendication 6, caractérisé en ce que les moyens coopérants sont constitués par un brin d'un autre convoyeur (16).

9. Appareil selon l'une quelconque des revendications 2 à 8, caractérisé en ce que lesdits premiers bords (10) des tuiles (2) sont supportés pendant et après l'opération de rotation sur un brin d'un convoyeur (9) qui est actionné à la même vitesse que celle des moyens permettant de transporter successivement les tuiles le long de la première trajectoire (1).

10. Appareil selon l'une quelconque des revendications 2 à 9, caractérisé en ce qu'un brin d'un convoyeur (7) qui est orienté sur la longueur de ladite première trajectoire (1) vient en contact, après que l'opération de rotation de chaque tuile (2) a commencé, avec la même surface de chaque tuile que les moyens de rotation (8, 13, 14).

11. Appareil selon la revendication 10, caractérisé en ce qu'un brin d'un autre convoyeur (12) vient en contact avec les autres surfaces des tuiles adjacentes à leurs dits premiers bords (10).

12. Appareil selon la revendication 10, caractérisé en ce qu'un élément de guidage allongé (17) vient en contact avec d'autres surfaces des tuiles adjacentes à leurs dits premiers bords.

13. Appareil selon l'une quelconque des revendications 2 à 12, caractérisé par le fait qu'il comprend des moyens de commutation électrique (18, 19) qui sont actionnés par le mouvement de chaque tuile sensiblement verticale (2c) et des moyens poussoirs (23 à 26) pour déplacer chaque tuile (2c) sur le côté le long de ladite trajectoire (3) sur laquelle la pile de tuiles (4) est formée, lesdits moyens poussoirs (23 à 26) répondant à la manoeuvre des moyens de commutation (18, 19) pour effectuer ledit mouvement de côté de chaque tuile (2c) avant la fin de ladite première trajectoire.

14. Appareil selon la revendication 13, caractérisé en ce que les moyens poussoirs (23 à 26) comprennent des arbres tournants entraînés supérieur et inférieur (23 et 24) portant une pluralité d'éléments souples faisant saillie (25 et 26) respectivement, et un moyen (23 et 24) qui limite l'amplitude du mouvement angulaire des arbres à des incréments qui sont fonction du nombre d'espaces entre les éléments souples (25 et 26), lesdits éléments souples (25 et 26) venant en contact avec une surface de chaque tuile adjacente à ses bords supérieur et inférieure repectivement pour effectuer le mouvement de poussée.

15. Appareil selon la revendication 14, caractérisé en ce que la seconde trajectoire (3) comprend un convoyeur d'entraînement (27) actionné par des moyens d'entraînement (29) qui répondent à un autre moyen de commutation électrique (28) qui est actionné par le mouvement de chaque tuile (2c) par les moyens poussoirs (23 à 26) et qui est ensuite libéré de façon que le convoyeur (27) déplace chaque tuile (2c) pas à pas, pour former la pile (4) et de façon à laisser de l'espace sur le convoyeur pour que la tuile suivante (2c) soit déplacée par les moyens poussoirs (23 à 26).

Fig.2

Fig.1

Fig.3

Fig.5

Fig.6

Fig.4